# DEMANDE DE BREVET EUROPEEN

(11) **EP 1 672 858 A2**
(43) Date de publication de la demande: **21.06.2006**
(21) Numéro de dépôt: 05112080.6
(22) Date de dépôt: 13.12.2005
(51) Int. Cl.: H04L 25/06, H04L 27/08, G06K 19/07

(54) **Détection d'erreurs dans un signal en modulation d'amplitude**

(30) Priorité: 14.12.2004 FR 0452954
(71) Demandeur: ST MICROELECTRONICS S.A., 92120 Montrouge (FR)
(72) Inventeur: Enguent, Jean-Pierre, Saint Savournin 13119 (FR)
(74) Mandataire: de Beaumont, Michel

(57) **Abrégé**

L'invention concerne un procédé et un circuit de détection d'un taux de modulation dans un signal reçu en modulation d'amplitude, consistant à comparer le signal reçu par rapport à deux premières valeurs (VM-ref1, VM+ref1), à comparer le signal reçu par rapport à deux deuxièmes valeurs (VM-ref2, VM+ref2) comprises entre les deux premières valeurs, et à considérer la présence d'une profondeur de modulation insuffisante si le signal reçu est compris entre au moins deux desdites valeurs.

## Description

### Domaine de l'invention

La présente invention concerne de façon générale les transmissions radiofréquence en modulation d'amplitude et, plus particulièrement, les transmissions effectuées avec un taux de modulation inférieur à l'unité.

Un exemple d'application de la présente invention concerne les systèmes à transpondeurs électromagnétiques dans lesquels une porteuse haute fréquence est modulée au moins en amplitude par un terminal pour une transmission vers un transpondeur électromagnétique, par exemple porté par une carte à puce, dans le champ du terminal.

### Exposé de l'art antérieur

Les systèmes pour transpondeurs électromagnétiques sont basés sur la coopération entre un circuit oscillant côté terminal de lecture-écriture et un circuit résonnant côté transpondeur électromagnétique (généralement un élément portable), pour échanger des informations en utilisant un champ haute fréquence rayonné par le circuit oscillant du terminal. Le plus souvent, la porteuse haute fréquence sert également de porteuse de téléalimentation fournissant l'énergie d'alimentation du transpondeur.

De tels systèmes sont décrits, par exemple, dans les brevets américains N° 6,031,319 et 6,703,921.

Un exemple d'application de l'invention concerne les systèmes à transpondeur basés sur des normes ISO 14443 et 15693 selon lesquelles la porteuse de téléalimentation rayonnée par le terminal est de 13,56 MHz, tandis qu'une sous-porteuse de rétromodulation peut être utilisée par les transpondeurs pour émettre des informations vers le terminal avec une fréquence de 847,5 kHz. Cette sous-porteuse n'est toutefois pas toujours présente selon les applications (de ces normes ou non). Dans le sens terminal vers transpondeur, la porteuse est modulée en amplitude avec un taux de modulation généralement de l'ordre de 10 % avec un débit de l'ordre de 106 kbits/seconde. Le taux de modulation se définit comme étant la différence d'amplitudes entre la transmission d'un état 1 et la transmission d'un état 0, divisée par la somme de ces amplitudes.

En fait, les normes fixent une plage de taux de modulation acceptables que les transpondeurs sont censés être capables d'interpréter, et que les terminaux sont censés respecter. Cette plage est, dans le cas des normes mentionnées ci-dessus, comprise entre 8 et 14 %.

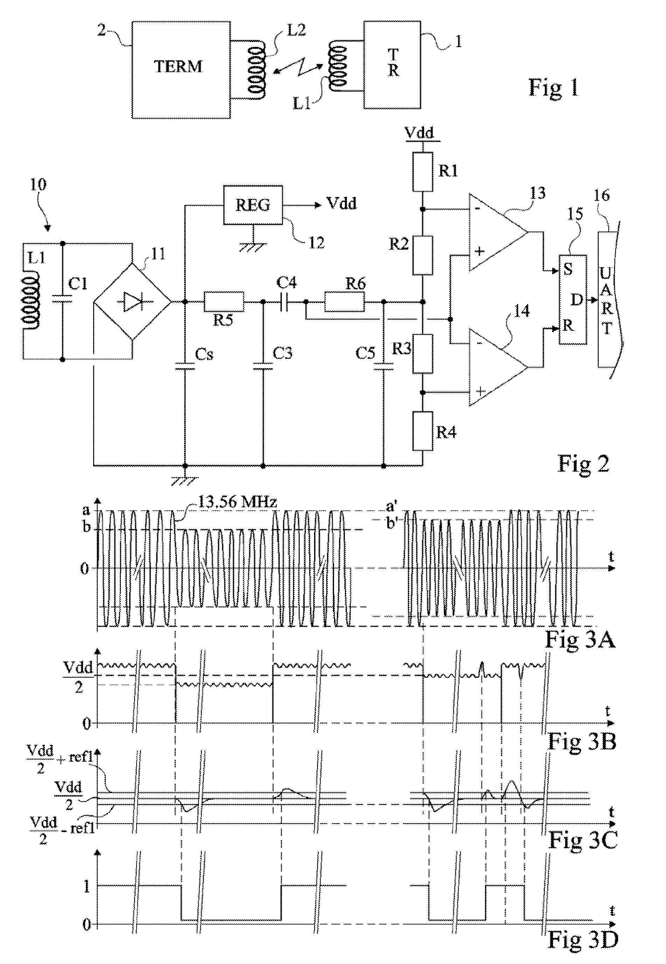

La figure 1 représente, de façon très schématique et sous forme de blocs, un exemple de système à transpondeur électromagnétique auquel s'applique l'invention. Un transpondeur 1 (TR) est destiné à être placé dans le champ électromagnétique d'un terminal 2 (TERM) dont un élément inductif L2 d'un circuit oscillant émet un rayonnement haute fréquence que capte une antenne L1 du transpondeur 1.

La figure 2 représente, de façon très schématique et en partie sous forme de blocs, un exemple d'architecture classique d'un transpondeur électromagnétique 1, destiné à communiquer avec un terminal de lecture-écriture (non représenté en figure 2). Le transpondeur comporte un circuit oscillant 10, constitué d'un élément inductif L1 formant antenne, en parallèle avec un condensateur C1 aux bornes d'entrée alternative d'un pont de redressement 11. Les bornes de sortie redressée du pont 11 sont reliées par un condensateur de stockage Cs.

Le signal capté lorsque le transpondeur 1 est dans le champ d'un terminal est utilisé, d'une part, pour extraire une tension d'alimentation Vdd des circuits du transpondeur, généralement au moyen d'un régulateur 12 (REG) et, d'autre part, pour décoder les éventuelles informations transmises par le terminal. Pour ce faire, le transpondeur comporte un circuit de démodulation d'amplitude comportant, par exemple :
un filtre formé d'une résistance R5 reliant la sortie du pont 11 à une première électrode d'un condensateur C3 dont l'autre électrode est connectée à la masse (deuxième borne de sortie du pont 1) ;
un condensateur C4 véhiculant la composante alternative de sortie du filtre précédent ;
une résistance R6 reliant l'électrode du condensateur C4 opposée au filtre à une première électrode d'un condensateur C5 dont l'autre électrode est connectée à la masse ;
deux comparateurs 13 et 14 du signal prélevé sur la deuxième électrode du condensateur C4 à deux seuils Vdd/2-ref1 et Vdd/2+ref1 ; et
une bascule 15 de type RS, dont les entrées S de mise à un et R de remise à zéro reçoivent les sorties respectives des comparateurs 13 et 14 et dont la sortie D fournit l'état détecté (démodulé) à un circuit d'interprétation numérique 16 (par exemple, une unité arithmétique et logique UART).

Les seuils Vdd/2-ref1 et Vdd/2+ref1 sont fixés par un pont diviseur constitué de quatre éléments résistifs R1, R2, R3 et R4 en série entre deux bornes d'application de la tension Vdd, les résistances R1 et R4 étant de même valeur et les résistances R2 et R3 étant de même valeur de sorte que le pont fixe, par l'intermédiaire de la résistance R6, un potentiel proportionnel à la moitié Vdd/2 de la tension d'alimentation Vdd.

Le rôle de l'élément résistif R6 est de reporter, sur le point de prélèvement du signal à interpréter, la valeur Vdd/2 de façon à centrer les variations dues aux fronts de changement d'état de l'enveloppe du signal modulé en amplitude.

Un démodulateur tel que représenté en figure 2 est décrit, par exemple, dans le brevet américain N° 6 031 419.

Pour simplifier la représentation de la figure 2, on a tenu compte uniquement de la partie réception du transpondeur. En particulier, les éléments de rétromodulation permettant de modifier la charge constituée par le transpondeur dans le champ électromagnétique d'un terminal pour une transmission dans le sens transpondeur vers terminal n'ont pas été représentés.

Les figures 3A, 3B, 3C et 3D illustrent le fonctionnement du démodulateur représenté en figure 2. La figure 3A représente un exemple d'allure d'un signal émis par un terminal à destination du transpondeur 1. La figure 3B illustre l'allure du signal reçu en sortie du pont redresseur 11 (en amont du filtre 13). La figure 3C illustre l'allure du signal appliqué sur les entrées de comparaison des comparateurs 13 et 14 (par exemple, l'entrée non-inverseuse du comparateur 13 et l'entrée inverseuse du comparateur 14) et les seuils de comparaison fixés par les résistances R1, R2, R3 et R4 (par exemple, Vdd/2+ref1 au dessus de la moitié de la tension Vdd et Vdd/2-ref1 en dessous). La figure 3D illustre le résultat fourni par la sortie D de la bascule 15.

Comme l'illustre la figure 3A, la porteuse (par exemple à 13,56 MHz) est modulée en amplitude avec un taux de modulation selon l'état du bit transmis. Le rythme de la modulation d'amplitude est inférieur à la fréquence de la porteuse. On peut considérer arbitrairement que l'état haut (niveau a) correspond à un état 1, tandis que l'état bas (niveau b) correspond à un état 0. Le taux de modulation (a-b/a+b) a été exagéré en figure 3A. Il est en pratique inférieur à 20 % dans la norme ISO 14443, type B.

Comme l'illustre la figure 3B, une fois redressé et filtré par les éléments R5 et C3, le signal se trouve, en principe, au-dessus ou en dessous de sa valeur moyenne selon l'état 1 ou 0 du bit transmis.

Comme l'illustre la partie gauche de la figure 3C, le condensateur C4 filtre la composante continue de sorte que le signal appliqué sur les entrées de comparaison des comparateurs 13 et 14 ne comporte, autour de la valeur Vdd/2, que des fronts lors des changements d'état.

Comme l'illustre la figure 3D, les comparateurs 13 et 14 détectent quand le signal sort de la fenêtre définie par les seuils Vdd/2-ref1 et Vdd/2+ref1, et la bascule 15 fournit un état 0 ou 1 selon le sens du front détecté.

Toutefois, si le terminal n'est pas capable de maintenir un taux de modulation suffisant (en pratique, d'au moins une dizaine de pourcent), on risque des erreurs d'interprétation sous l'effet du bruit, les écarts entre les niveaux reçus et les seuils devenant trop faibles. A l'extrême, les seuils peuvent encadrer le signal reçu dans les deux états 0 et 1.

Ce phénomène est illustré par les parties droites des figures 3A à 3D qui représentent le cas d'un signal entre des amplitudes a' et b' définissant un taux de modulation plus faible qu'en partie gauche. Comme l'illustrent les figures 3B et 3C, d'éventuels bruits sont susceptibles de sortir de la plage définie par les seuils Vdd/2-ref1 et Vdd/2+ref1 quel que soit l'état du bit transmis, engendrant des détections erronées (figure 3D).

Le problème ci-dessus est de plus en plus présent en raison de la multiplication des types de terminaux et des types de transpondeurs qui sont censés coopérer les uns avec les autres. En effet, selon la fabrication et l'architecture du terminal et/ou du transpondeur, leurs caractéristiques de fonctionnement respectives sont susceptibles d'influencer l'autre élément de transmission (transpondeur ou terminal) d'une façon différente. De plus, l'environnement dans lequel se trouvent le terminal et le transpondeur peut également influer sur le champ électromagnétique et sur le taux de modulation effectivement transmis par le terminal.

En pratique, les terminaux sont réglés dans une phase de caractérisation pour que leur taux de modulation soit, dans les normes susmentionnées, compris entre 8 et 14 %. Toutefois, en fonctionnement réel, ce taux est susceptible de varier pour les raisons invoquées ci-dessus et de devenir indétectable par un transpondeur.

Le fait qu'un transpondeur ne parvienne pas à interpréter les données reçues par un terminal, constitue un premier inconvénient.

Un deuxième inconvénient est que le terminal ne recevant pas de réponse du transpondeur sait qu'il n'a pas été compris, mais il ne sait pas pourquoi. En particulier, d'autres dysfonctionnements peuvent entraîner une mauvaise détection du signal par le transpondeur, sans que cela soit lié au taux de modulation.

Il serait souhaitable que le terminal puisse modifier en temps réel le taux de modulation du signal qu'il émet afin que celui-ci puisse être capté correctement par un transpondeur.

Le réglage du taux de modulation ne constitue pas une difficulté pratique dans la mesure où les terminaux sont généralement équipés de microprocesseurs pour régler les circuits d'émission-réception et que cette capacité de réglage existe déjà le plus souvent pour la phase de caractérisation du terminal. Toutefois, les terminaux ne sont aujourd'hui pas capables de régler ce taux de modulation en temps réel, car ils ne disposent pas d'une information cohérente sur la raison qui entraîne une absence de réception correcte par un transpondeur.

On utilise la notion de taux de modulation pour caractériser la différence d'amplitudes entre les états 0 et 1 transmis en modulation d'amplitude. Toutefois, d'autres paramètres comme, par exemple, l'index de modulation qui correspond au rapport (a/b) entre les deux amplitudes sont parfois utilisés. Faire référence à ces paramètres reviendrait au même, cela ne constituerait que d'autres manières d'exposer le problème.

### Résumé de l'invention

La présente invention vise à pallier tout ou partie des inconvénients des systèmes connus de transmission par modulation d'amplitude sur charge variable.

L'invention vise notamment à détecter une insuffisance de taux de modulation.

L'invention vise également à proposer une solution dans laquelle cette détection n'entraîne pas de modification du terminal d'émission et s'effectue côté récepteur.

L'invention vise également à informer le terminal d'émission du type de perturbation engendrant un défaut d'interprétation des données par le récepteur.

L'invention vise également à proposer une solution particulièrement adaptée aux systèmes à transpondeur électromagnétique.

Pour atteindre tout ou partie de ces objets ainsi que d'autres, la présente invention prévoit un procédé de détection d'un taux de modulation dans un signal reçu en modulation d'amplitude, consistant :
à comparer le signal reçu par rapport à deux premières valeurs ;
à comparer le signal reçu par rapport à deux deuxièmes valeurs comprises entre les deux premières valeurs ; et
à considérer la présence d'une profondeur de modulation insuffisante si le signal reçu est compris entre au moins deux desdites valeurs.

Selon un mode de mise en oeuvre de la présente invention, lesdites valeurs sont adaptées par rapport au niveau moyen du signal reçu.

Selon un mode de mise en oeuvre de la présente invention, lesdites valeurs sont adaptées à la tension d'alimentation du démodulateur.

Selon un mode de mise en oeuvre de la présente invention, une information sur la présence éventuelle d'un taux de modulation insuffisant est transmise à l'émetteur du signal.

Selon un mode de mise en oeuvre de la présente invention, le récepteur est un transpondeur électromagnétique.

L'invention prévoit également un procédé de détection d'erreurs dans un signal reçu en modulation d'amplitude, consistant :
à détecter une éventuelle insuffisance du taux de modulation du signal émis ; et
à détecter une éventuelle erreur due au bruit en échantillonnant le signal démodulé à une fréquence supérieure à la fréquence de modulation, pour détecter d'éventuels changements d'états parasites.

Selon un mode de mise en oeuvre de la présente invention, une information sur la présence éventuelle d'une erreur due au bruit est transmise à l'émetteur du signal, de façon à provoquer une diminution de la bande passante d'émission.

Selon un mode de mise en oeuvre de la présente invention, une éventuelle erreur de trame est détectée par vérification d'une donnée prédéterminée à chaque début de trame.

Selon un mode de mise en oeuvre de la présente invention, une information sur la présence d'une erreur de trame est transmise à l'émetteur du signal.

L'invention prévoit également un démodulateur d'amplitude, comportant :
un premier élément de filtrage d'un signal reçu en modulation d'amplitude pour fournir un signal à interpréter ;
un deuxième élément de filtrage ayant une constante de temps inférieure à celle du premier élément de filtrage pour déterminer une valeur moyenne du signal reçu ;
deux premiers éléments de comparaison de l'amplitude du signal à interpréter par rapport à deux valeurs encadrant ladite valeur moyenne ;
au moins deux deuxièmes éléments de comparaison de l'amplitude du signal à interpréter par rapport à deux deuxièmes valeurs encadrant la valeur moyenne et comprises entre les deux premières valeurs ; et
un circuit d'interprétation des résultats des éléments de comparaison indiquant un taux de modulation insuffisant si le signal reçu est compris entre au moins deux desdites valeurs.

La présente invention prévoit également un démodulateur d'amplitude comportant :
un élément de filtrage d'un signal reçu en modulation d'amplitude ;
un élément capacitif de filtrage d'une première composante continue fournie par l'élément de filtrage ;
un élément d'ajout d'une deuxième composante continue correspondant à la moitié de la tension d'alimentation du démodulateur au signal issu de l'élément capacitif ;
deux premiers éléments de comparaison de l'amplitude du signal à interpréter par rapport à deux valeurs encadrant la moitié de ladite tension d'alimentation ;
au moins deux deuxièmes éléments de comparaison de l'amplitude du signal à interpréter par rapport à deux deuxièmes valeurs encadrant la moitié de ladite tension d'alimentation et comprises entre les deux premières valeurs ; et
un circuit d'interprétation des résultats des éléments de comparaison indiquant un taux de modulation insuffisant si le signal reçu est compris entre au moins deux desdites valeurs.

Selon un mode de réalisation de la présente invention, les sorties des éléments de comparaison sont lues par des bascules.

Selon un mode de réalisation de la présente invention, le circuit d'interprétation des données démodulées vérifie la présence d'un message prédéterminé à chaque début de trame transmise.

Selon un mode de réalisation de la présente invention, le circuit d'interprétation des données démodulées vérifie la présence de changements d'états rapides devant la constante de temps du premier élément de filtrage pour déterminer une éventuelle présence de bruit.

### Brève description des dessins

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 qui a été décrite précédemment représente, de façon très schématique et sous forme de blocs, un exemple de système à transpondeur électromagnétique du type auquel s'applique préférentiellement la présente invention ;
la figure 2 qui a été décrite précédemment représente partiellement, de façon très schématique et sous forme de blocs, un exemple d'architecture classique d'un transpondeur électromagnétique ;
les figures 3A, 3B, 3C et 3D qui ont été décrites précédemment illustrent le fonctionnement du démodulateur du transpondeur de la figure 2 ;
la figure 4 représente, partiellement et sous forme de blocs, un mode de réalisation de la partie réception d'un transpondeur électromagnétique selon la présente invention ;
la figure 5 illustre le fonctionnement du démodulateur de la figure 4 ; et
la figure 6 représente un mode de réalisation d'un élément d'interprétation du démodulateur de la figure 4.

### Description détaillée

Les mêmes éléments ont été désignés par de mêmes références aux différentes figures. Par souci de clarté, seuls les éléments nécessaires à la compréhension de l'invention ont été représentés et seront décrits par la suite. En particulier, les structures respectives des systèmes numériques (microprocesseur ou logique câblée) d'interprétation des données transmises n'ont pas été détaillées, l'invention étant compatible avec les systèmes classiques.

La présente invention sera décrite par la suite en relation avec un exemple d'application aux transpondeurs électromagnétiques. On notera toutefois qu'elle s'applique plus généralement à tout système de transmission en modulation d'amplitude dans lesquelles une modification du taux de modulation est susceptible d'engendrer des erreurs d'interprétation. Par exemple, il pourra s'agir d'autres systèmes de transmission radiofréquence, voire de systèmes de transmission filaires (modem).

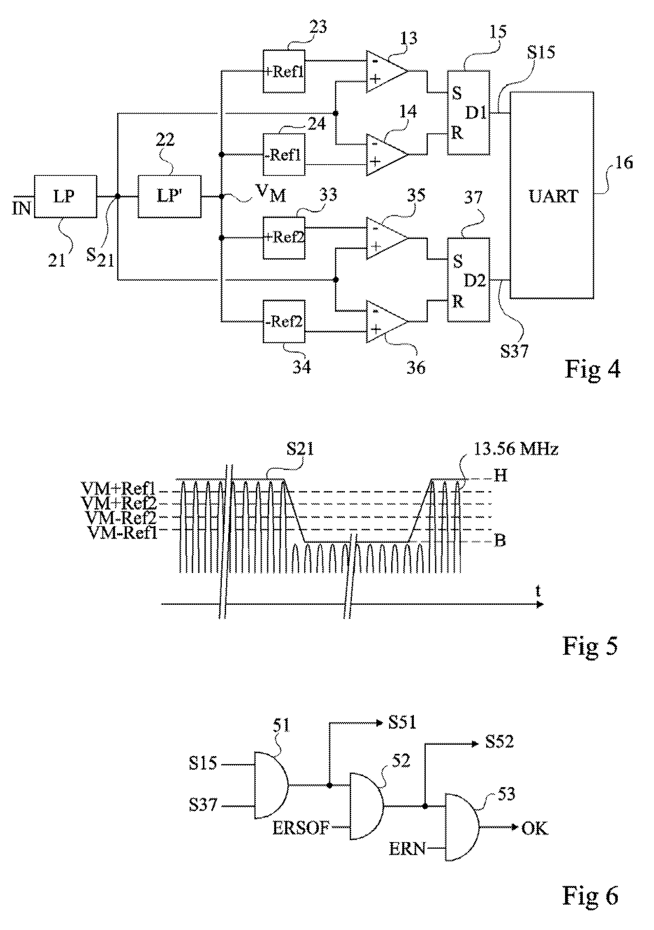

La figure 4 représente, de façon schématique et sous forme de blocs, un mode de réalisation d'un démodulateur selon l'invention.

Ce démodulateur est destiné à recevoir un signal IN modulé en amplitude provenant, par exemple, de la sortie d'un pont de redressement (11, figure 2) d'un circuit oscillant d'un transpondeur électromagnétique. Le signal IN est appliqué à un premier filtre passe-bas 21 (LP) dont la constante de temps est fonction du rythme de modulation en amplitude du signal IN (par exemple, 106 kilobits par seconde). La sortie S21 du filtre 21 sert d'une part à interpréter le signal reçu et d'autre part à générer, au moyen d'un deuxième filtre passe bas 22 (LP'), une valeur moyenne V_{M} de ce signal.

Deux éléments 23 et 24 servent à générer, par exemple à partir de la tension d'alimentation Vdd du transpondeur, deux seuils de comparaison V_{M}+ref1 et V_{M}-ref1 à partir de la valeur moyenne fournie par le filtre 22. Par exemple, la valeur ref1 est choisie comme pour les démodulateurs classiques.

Selon ce mode de réalisation de l'invention, deux autres seuils V_{M}+ref2 et V_{M}-ref2 sont générés par des éléments 33 et 34 qui reçoivent la valeur moyenne V_{M}. Les seuils fournis par les éléments 33 et 34 sont prévus pour être compris entre les seuils V_{M}+ref1 et V_{M}-ref1.

Les éléments 23, 24, 33 et 34 sont, par exemple, constitués d'un ou plusieurs ponts diviseurs résistifs de la valeur V_{M} dont des points intermédiaires fournissent les différents seuils.

Le démodulateur de la figure 4 comporte quatre éléments de comparaison 13, 14, 35 et 36 du signal reçu (sortie S21 du filtre 21) par rapport aux quatre seuils fournis par les éléments 23, 24, 33 et 34. Dans l'exemple représenté, les deux comparateurs 13 et 35 reçoivent, sur leurs entrées inverseuses respectives, les signaux V_{M}+ref1 et V_{M}+ref2 et, sur leurs entrées non-inverseuses respectives, le signal de sortie S21 du filtre 21. Les deux comparateurs 14 et 36 reçoivent, sur leurs entrées inverseuses respectives, le signal de sortie du filtre 21 et, sur leurs entrées non inverseuses respectives, les seuils V_{M}-ref1 et V_{M}-ref2. Les sorties des comparateurs 13 et 14 sont envoyées sur les entrées S de mise à un et R de remise à zéro respectives d'une bascule RS 15 ou tout autre élément équivalent dont la sortie D1 fournit l'état du signal par rapport aux seuils V_{M}-ref1 et V_{M}+ref1. Les sorties respectives des comparateurs 35 et 36 sont envoyées sur les entrées S de mise à un et R de remise à zéro d'une deuxième bascule 37 ou équivalent dont la sortie D2 fournit l'état du signal par rapport aux seuils V_{M}-ref2 et V_{M}+ref2.

Les sorties respectives S15 et S37 des bascules 15 et 37 sont interprétées par un circuit 16 constituant une unité arithmétique et logique (UART) ou tout autre élément numérique d'interprétation des données reçues.

Selon un autre mode de réalisation non représenté, le démodulateur est basé sur la structure du démodulateur classique représenté en figure 2 auquel, selon l'invention, on ajoute deux comparateurs et deux générations de seuils Vdd/2-ref2 et Vdd/2+ref2 compris entre les seuils Vdd/2-ref1 et Vdd/2+ref1. Fonctionnellement, la différence par rapport au mode de réalisation de la figure 4 est que les seuils sont basés sur la tension d'alimentation (qui idéalement correspond à la valeur moyenne) et pas sur la valeur moyenne du signal reçu.

La figure 5 illustre, par un chronogramme simplifié, le fonctionnement du démodulateur de la figure 4. Le signal S21 de sortie du filtre 21 correspond à l'enveloppe de la porteuse (par exemple à 13,56 MHz). Pour simplifier, on n'a pas tenu compte d'un éventuel bruit autour de cette enveloppe. Toutefois, et comme on le verra par la suite, l'invention permet également de s'affranchir d'éventuelles fausses détections dues à un tel bruit. Les valeurs ref1 et ref2 sont choisies en fonction des taux de modulation acceptables pour le système. Les seuils V_{M}-ref1, V_{M}+ref1, V_{M}-ref2 et V_{M}+ref2 sont adaptés à la valeur moyenne V_{M} de sorte qu'ils sont compris entre les deux états respectivement haut H et bas B du signal indiquant, par exemple, les états 1 ou 0 transmis.

Les résultats fournis par les bascules 15 et 37 sont interprétés pour déterminer si le taux de modulation du signal émis par le terminal est ou non suffisant. Fonctionnellement, on considère un taux de modulation suffisant si les états des deux bits S15 et S37 sont cohérents l'un avec l'autre, c'est-à-dire qu'ils sont soit tous deux à l'état bas soit tous deux à l'état haut. Dans le cas contraire (par exemple, si le signal sort de la plage définie par les seuils V_{M}-ref2 et V_{M}+ref2 tout en restant dans la plage définie par les seuils V_{M}-ref1 et V_{M}+ref1), cela signifie une profondeur de modulation insuffisante. On prévoit alors de transmettre cette information au terminal (2, figure 1) afin qu'il adapte le taux de modulation de ses transmissions. Différentes méthodes de transmission de cette information vers le terminal pourront être envisagées comme on le verra par la suite.

Selon un mode de réalisation préféré de l'invention, on exécute un deuxième test afin de déterminer la présence d'un bruit perturbateur. En effet, dans un démodulateur classique, la présence de bruit peut également engendrer des erreurs de détection. En présence de telles erreurs, le terminal peut, par exemple, réduire la bande passante du signal (c'est-à-dire le débit). Mais, là encore, il faut que le terminal connaisse la cause de l'erreur de détection pour être capable de prendre les mesures appropriées.

Selon ce mode de réalisation préféré de l'invention, on détecte, après démodulation, d'éventuels changements d'états rapides du signal démodulé. Une telle détection est effectuée par l'unité 16 par exemple par une programmation adaptée. Cette détection revient à échantillonner le signal reçu à une fréquence supérieure à la bande passante de façon à détecter des changements rapides susceptibles de provenir d'un bruit éventuel. La détection est effectuée, par exemple, à chaque début de trame détecté par l'unité 16 qui fournit un deuxième indicateur d'erreur (par exemple un bit ERN) lié au bruit.

De préférence, on effectue un troisième test de cohérence de trame en utilisant, par exemple, des bits SOF de début de trame ("Start Of Frame") émis du terminal vers le transpondeur. Par exemple, on établit un nombre de bits dans un état stable (par exemple, l'état 0) transmis à chaque début de trame. Ce nombre de bits peut être, par exemple, de 10 ou 11 dans le cas de la norme ISO 14443 type B. Si, en réception, le transpondeur reçoit bien le nombre prévu de bits en début de trame, c'est que la trame débute correctement. Dans le cas contraire, et à condition que le taux de modulation soit considéré comme suffisant par la vérification précédente par rapport aux seuils V_{M}-ref1, V_{M}+ref1, V_{M}-ref2 et V_{M}+ref2 et qu'aucune perturbation due au bruit n'ait été détectée par le deuxième test (s'il est prévu), on considère que l'on est en présence d'une erreur de trame. Par conséquent, si le signal issu du filtre 21 est inférieur aux deux seuils V_{M}-ref1 et V_{M}-ref2 représentant un niveau bas, que l'unité 16 n'a pas détecté de bruit trop important, mais que l'unité 16 ne détecte pas, par exemple, 10 bits consécutifs à l'état 0, on prévoit d'informer le terminal (par exemple, par l'état d'un bit ERSOF) que la trame émise est erronée afin qu'il puisse, par exemple, la réémettre.

Les trois états détectés (taux de modulation, bruit et erreur de trame) sont, selon un mode de réalisation préféré de l'invention, exploités ensemble pour indiquer au terminal une éventuelle modification de son émission afin d'améliorer la transmission.

La figure 7 représente, de façon très schématique et par un schéma à base de portes logiques, un exemple de combinaison des différents états par la mise en oeuvre de l'invention.

Une première porte logique 51 de type ET combine les sorties S15 et S37 respectives des bascules 15 et 37 de façon à détecter la présence d'un franchissement simultané des seuils ref1 et ref2 dans un même sens. La sortie de la porte 51 fournit un bit S51 indicateur d'un taux de modulation suffisant (état 1) ou non (état 0) en émission. Cette sortie est reçue par une première entrée d'une deuxième porte logique 52 de type ET dont l'autre entrée reçoit le bit ERSOF indicateur de l'absence de réception correcte d'un début de trame (une dizaine de bits au même état). On suppose qu'un bit ERSOF à l'état 1 signifie une réception correcte. La sortie S52 de la porte 52 est envoyée en entrée d'une troisième porte logique 53 de type ET dont la deuxième entrée reçoit le bit ERN, indicateur d'une erreur due au bruit, détectée par l'unité 16.

Si la sortie de la porte 53 est à l'état haut, cela signifie une transmission suffisamment bonne ne nécessitant pas d'adaptation de la part du terminal. Dans le cas contraire :
si la sortie de la porte 52 est à l'état 1, cela signifie une erreur due au bruit et le transpondeur va demander au terminal de réduire sa bande passante ;
si la sortie de la porte 52 est à l'état 0 mais que la sortie de la porte 51 est à l'état 1, cela signifie une erreur de trame et le transpondeur va indiquer cet état au terminal ;
si la sortie S51 est à l'état zéro, cela signifie qu'il convient de demander au terminal d'augmenter son taux de modulation.

La transmission de l'information du transpondeur vers le terminal peut s'effectuer de plusieurs manières.

Selon un premier exemple, le transpondeur commande sa rétromodulation de façon à ne pas respecter le format d'une trame attendue par le terminal. Par exemple, il modifie le début de sa trame de réponse (bits du mot SOF de sa trame) de façon à avertir le terminal d'un problème. En détectant un début de trame particulier (par exemple, huit changements de phase successifs dans le mot SOF), le lecteur sait qu'il doit attendre une information particulière relative à une erreur détectée.

Selon un premier exemple, on utilise alors la trame qui suit (les huit bits de données compris entre un bit de départ et un bit d'arrêt) pour transmettre l'information.

Selon un deuxième exemple, on module le nombre de changements de phase du début de trame selon l'information à transmettre. Trois informations différentes peuvent être transmises en cas de problème. Par exemple, on prévoit huit changements de phase successifs pour réclamer une profondeur de modulation supérieure au terminal, seize changements de phase successifs pour réclamer une diminution de la bande passante ou vingt-quatre changements de phase successifs pour indiquer une erreur de trame.

Le changement de bande passante dans le terminal peut s'effectuer, soit de façon numérique directement par le microprocesseur contenu dans le terminal, soit en commutant une résistance en série avec l'inductance du circuit oscillant.

Selon un autre mode de mise en oeuvre de l'invention, l'information relative à une éventuelle erreur détectée utilise des bits traditionnellement non utilisés dans des trames de réponse d'un transpondeur vers un terminal. Ce mode de réalisation est plus particulièrement destiné à l'application de la norme ISO 14443 et aux trames prévues par celle-ci.

Bien entendu, la présente invention est susceptible de diverses variantes et modifications qui apparaîtront à l'homme de l'art. En particulier, la mise en oeuvre pratique de l'invention à partir des indications fonctionnelles données ci-dessus est à la portée de l'homme du métier en utilisant des outils classiques. De plus, la transposition de l'invention à une autre application que des transpondeurs électromagnétiques pour résoudre des problèmes de taux de modulation est également à la portée de l'homme du métier. En outre, bien que l'invention ait été décrite en utilisant un vocabulaire correspondant plus à une réalisation matérielle, sa mise en oeuvre pourra faire appel partiellement ou totalement à des moyens logiciels, par exemple, en exploitant de façon logicielle, le signal IN numérisé.

## Revendications

1. Procédé de détection d'un taux de modulation dans un signal (IN) reçu en modulation d'amplitude, **caractérisé en ce qu'**il consiste :
à comparer le signal reçu par rapport à deux premières valeurs (V_{M}-ref1, V_{M}+ref1) ;
à comparer le signal reçu par rapport à deux deuxièmes valeurs (V_{M}-ref2, V_{M}+ref2) comprises entre les deux premières valeurs ; et
à considérer la présence d'une profondeur de modulation insuffisante si le signal reçu est compris entre au moins deux desdites valeurs.

2. Procédé selon la revendication 1, dans lequel lesdites valeurs sont adaptées par rapport au niveau moyen du signal reçu.

3. Procédé selon la revendication 1, dans lequel lesdites valeurs sont adaptées à la tension d'alimentation (Vdd) du démodulateur.

4. Procédé selon la revendication 1, consistant à transmettre à l'émetteur (2) du signal une information sur la présence éventuelle d'un taux de modulation insuffisant.

5. Procédé selon la revendication 1, dans lequel le récepteur est un transpondeur électromagnétique (1).

6. Procédé de détection d'erreurs dans un signal reçu en modulation d'amplitude, **caractérisé en ce qu'**il consiste :
à détecter une éventuelle insuffisance du taux de modulation du signal émis par la mise en oeuvre du procédé selon l'une quelconque des revendications 1 à 5 ; et
à détecter une éventuelle erreur due au bruit en échantillonnant le signal démodulé à une fréquence supérieure à la fréquence de modulation, pour détecter d'éventuels changements d'états parasites.

7. Procédé selon la revendication 6, consistant à transmettre à l'émetteur (2) du signal une information sur la présence éventuelle d'une erreur (ERN) due au bruit, de façon à provoquer une diminution de la bande passante d'émission.

8. Procédé selon la revendication 6, dans lequel une éventuelle erreur de trame est détectée par vérification d'une donnée prédéterminée à chaque début de trame.

9. Procédé selon la revendication 8, consistant à transmettre à l'émetteur (2) du signal une information sur la présence d'une erreur de trame (ERSOF).

10. Démodulateur d'amplitude, **caractérisé en ce qu'**il comporte :
un premier élément de filtrage (21) d'un signal reçu en modulation d'amplitude pour fournir un signal à interpréter ;
un deuxième élément de filtrage (22) ayant une constante de temps inférieure à celle du premier élément de filtrage pour déterminer une valeur moyenne (V_{M}) du signal reçu ;
deux premiers éléments de comparaison (13, 14) de l'amplitude du signal à interpréter par rapport à deux valeurs (V_{M}-ref1, V_{M}+ref1) encadrant ladite valeur moyenne (V_{M}) ;
au moins deux deuxièmes éléments de comparaison (35, 36) de l'amplitude du signal à interpréter par rapport à deux deuxièmes valeurs (V_{M}-ref2, V_{M}+ref2) encadrant la valeur moyenne et comprises entre les deux premières valeurs ; et
un circuit (15, 37, 16) d'interprétation des résultats des éléments de comparaison indiquant un taux de modulation insuffisant si le signal reçu est compris entre au moins deux desdites valeurs.

11. Démodulateur d'amplitude comportant :
un élément de filtrage (R5, C3) d'un signal reçu en modulation d'amplitude ;
un élément capacitif (C4) de filtrage d'une première composante continue fournie par l'élément de filtrage ;
un élément (R6) d'ajout d'une deuxième composante continue correspondant à la moitié de la tension d'alimentation du démodulateur au signal issu de l'élément capacitif ;
deux premiers éléments de comparaison (13, 14) de l'amplitude du signal à interpréter par rapport à deux valeurs (Vdd/2-ref1, Vdd/2+ref1) encadrant la moitié de ladite tension d'alimentation,
**caractérisé en ce qu'**il comporte :
au moins deux deuxièmes éléments de comparaison (35, 36) de l'amplitude du signal à interpréter par rapport à deux deuxièmes valeurs (Vdd/2-ref2, Vdd/2+ref2) encadrant la moitié de ladite tension d'alimentation et comprises entre les deux premières valeurs ; et
un circuit (15, 16, 37) d'interprétation des résultats des éléments de comparaison indiquant un taux de modulation insuffisant si le signal reçu est compris entre au moins deux desdites valeurs.

12. Démodulateur selon la revendication 10 ou 11, dans lequel les sorties des éléments de comparaison (13, 14, 35, 36, 45) sont lues par des bascules (15, 37).

13. Démodulateur selon la revendication 10 ou 11, dans lequel le circuit d'interprétation des données démodulées vérifie la présence d'un message prédéterminé à chaque début de trame transmise.

14. Démodulateur selon la revendication 10, dans lequel le circuit d'interprétation des données démodulées vérifie la présence de changements d'états rapides devant la constante de temps du premier élément de filtrage (21) pour déterminer une éventuelle présence de bruit.
